Europäisches Patentamt

European Patent Office

Office européen des brevets

(11) Publication number: **0 467 180 A2**

# EUROPEAN PATENT APPLICATION

(21) Application number: **91111288.6**

(22) Date of filing: **06.07.91**

(51) Int. Cl.5: **C22B 59/00**

(30) Priority: **17.07.90 US 553987**

(43) Date of publication of application:
**22.01.92 Bulletin 92/04**

(84) Designated Contracting States:
**DE FR GB SE**

(71) Applicant: **IOWA STATE UNIVERSITY RESEARCH FOUNDATION, INC.**
**214 O & L, Iowa State University**
**Ames, Iowa 50011-3029(US)**

(72) Inventor: **Schmidt, Frederick A.**
**211 20th**
**Ames, Iowa 50010(US)**
Inventor: **Peterson, David T.**
**405 24th St.**
**Ames, Iowa 50010(US)**
Inventor: **Wheelock, John T.**
**1939 7th**
**Nevada, Iowa 50201(US)**
Inventor: **Richard, John**
**PR No. 1**
**Ames, Iowa 50010(US)**

(74) Representative: **Hoeger, Stellrecht & Partner**
**Uhlandstrasse 14 c**
**W-7000 Stuttgart 1(DE)**

(54) **Rare earth/transition metal alloy scrap treatment method.**

(57) A method of treating rare earth/transition metal (e.g., iron) alloy scrap involves dissolving the scrap in an aqueous mineral acid solution, reacting the solution of dissolved rare earth metal and transition metal with sufficient excess HF acid to selectively precipitate the rare earth fluoride while retaining the transition metal (e.g., iron) in solution, and then separating the precipitated rare earth fluoride from the solution. The separated rare earth fluoride is dried to render it suitable for use as a reactant salt feedstock in the thermite reduction process or in other metallothermic reduction processes.

FIG.1

## Field of the Invention

The present invention relates to the treatment of rare earth/transition metal alloy scrap to recover the rare earth metal in a form (e.g., a rare earth metal fluoride) amenable for reuse in the thermite reduction process or in other metallothermic processes for preparing the respective rare earth metal or alloy.

## Background of the Invention

A number of rare earth-iron alloys have been developed which exhibit desirable magnetostrictive properties as described, for example, by Savage et al. in U.S. Patent 4,308,474 which issued December 29, 1981. The alloys described therein (e.g., Tb-Dy-Fe alloys) have been found to be useful in magnetostrictive transducers, delay lines, variable frequency resonators and filters.

Another group of alloys based on rare earth-iron-boron compositions is described by Schmidt et al. in U.S. Patent 4,612,047 issued September 16, 1986 and by Seon et al. in U.S. Patent 4,636,353 issued January 13, 1987. The alloys (e.g., Nd-Fe-B) exhibit highly desirable magnetic properties for use as permanent magnets.

The commercialization of these rare earth/iron alloys has progressed to the point that relatively large quantities of rare earth/iron alloy scrap have been generated from the various manufacturing operations used to fabricate the alloys into suitable magnet components, electrical components and the like. The rare earth/iron alloy scrap generated by these fabrication operations varies considerably in form from dry, bulky, relatively large scrap pieces to a fine powder or dust referred to as "swarf". The swarf is produced primarily from abrasive cutting and grinding fabrication operations. Swarf presents especially difficult scrap disposal problems as a result of the pyrolytic nature of the fine rare earth/iron powder or dust.

Industries that fabricate rare earth/iron alloys into articles of manufacture require some method to dispose of the rare earth/iron scrap and recover the valuable rare earth material for reuse. This is especially true in the case of the RE/Fe "swarf" generated in the various fabrication operations. There is also a need to dispose of the rare earth/iron scrap in a manner that allows recovery of the rare earth metal in a form amenable for reuse. In particular, a treatment process is needed that allows recovery of the rare earth metal fluoride for use in the thermite reduction process (described by Schmidt et al. in U.S. Patent 4,612,047) or for use in other metallothermic processes for preparing the respective rare earth metal or alloy.

An object of the present invention is to address these needs by providing a low cost, wet method of treating rare earth/transition metal (e.g., iron) alloy scrap in a manner to recover the rare earth metal thereof in a form amenable for use in the thermite reduction process or for use in other metallothermic processes for preparing the respective rare earth metal or alloy. The method of the invention also has an object to reduce or eliminate the impurities in the swarf that are introduced during the fabrication processes.

## Summary of the Invention

The present invention involves a new, wet method of treating rare earth/transition metal (e.g., iron) alloy scrap comprising dissolving the scrap in an aqueous mineral acid solution, such as an aqueous HCl solution, reacting the solution of dissolved rare earth metal and transition metal with HF acid in an amount effective to selectively precipitate an insoluble rare earth fluoride from the solution, and separating the precipitated rare earth fluoride from the solution. The separated rare earth fluoride is then dried to a form suitable for reuse in the thermite reduction process or other metallothermic preparation processes.

The dried rare earth metal fluoride produced from rare earth/iron alloy scrap in accordance with the invention typically includes about 2 weight % or less of $FeF_3$ therein. The presence of iron fluoride at this concentration is tolerable in the thermite reduction process since it is carried out by reducing the rare earth fluoride at elevated temperature by a reducing metal (e.g., Ca) in the presence of iron (e.g., iron fluoride), which serves as a source of iron for alloying. The reduction of $FeF_3$ with calcium metal serves as a thermal booster to the reduction process.

The method of the invention is useful in treating rare earth/transition metal alloy scrap, especially swarf, wherein the scrap comprises (a) a transition metal such as one or more of Fe, Co or Ni, (b) one or more of Nd, Dy, Tb, Pr, Sm, Ho, La, Ce, Eu, Gd, Er, Tm, Yb, Lu, Y, and Sc and (c) other optional alloyants such as boron. In treating rare earth/transition metal alloy scrap including two or more rare earth metals (e.g., Tb-Dy-Fe), the method of the invention is effective to recover the various rare earth metal fluorides involved (e.g., terbium fluoride and dysprosium fluoride) for reuse in the thermite reduction process or other metallothermic preparation processes.

The aforementioned objects and advantages of the invention will become more readily apparent from the following detailed description and drawings.

## Description of the Drawings

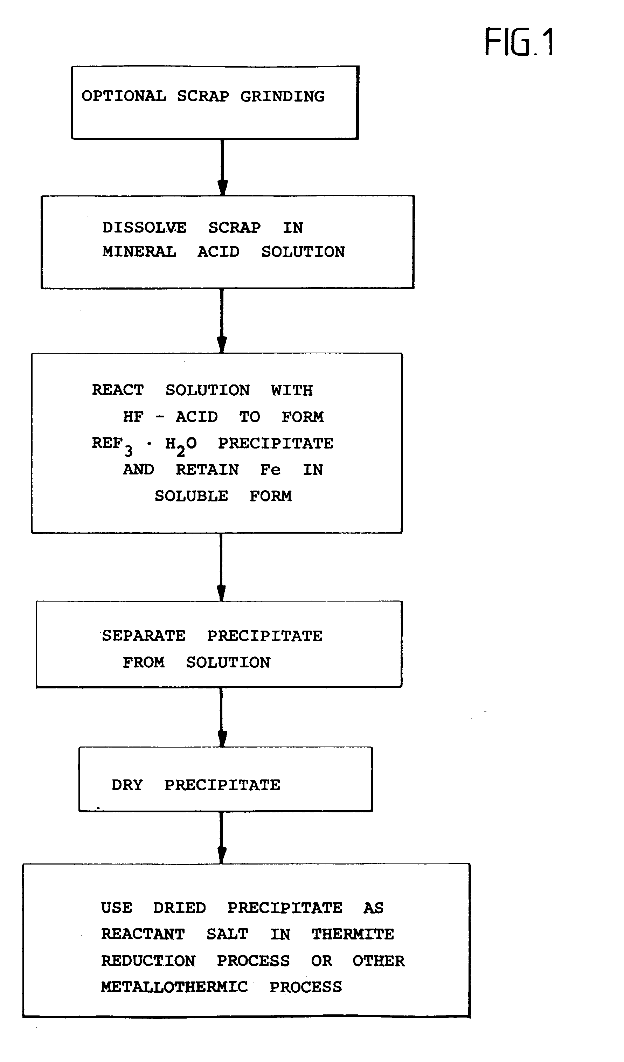

The Figure is a flow sheet illustrating the sequential method steps of one embodiment of the invention.

Detailed Description of the Invention

Referring to the Figure, the various steps involved in practicing one particular embodiment of the method of the invention are illustrated. In this particular embodiment of the invention, rare earth/iron alloy scrap is typically received from one or more fabricating operations, either on-site or off-site, and initially segregated (graded) by alloy composition, size, shape, and other factors. For example, fine, pyrolytic rare earth/iron alloy dust or powder (referred to as swarf) of like or similar composition is segregated for treatment whereas dry, bulky scrap pieces of the same or similar composition are segregated into one or more groups by size and shape for treatment.

Swarf will typically comprise fine powder or particulates in the particle size range of less than 50 microns produced by such fabrication operations as abrasive cutting and grinding. Swarf can be treated in accordance with the invention in the as-received particulate condition.

Bulky scrap pieces may also be treated in accordance with the invention in the as-received condition. However, if desired, bulky scrap pieces may be ground in suitable manner into particulate form (e.g., particle sizes of less than about 500 microns) for treatment.

The method of the invention is useful for treating a wide variety of binary, ternary, and other rare earth/transition metal alloy compositions. Rare earth/iron alloy scrap treatable in accordance with the invention will comprise iron, one or more of Nd, Dy, Tb, Pr, Sm, Ho La, Ce, Eu, Gd, Er, Tm, Yb, Lu, Y and Sc, and other optional alloyants such as B, or other non-metallics that may be used for one reason or another in the alloy compositions. The present invention envisions treating similar alloy scrap wherein the transition metal may be Co and/or Ni in lieu of or in addition to Fe.

As mentioned above, the scrap will typically be segregated for treatment into groups having the same or similar compositions. For example, Tb-Dy-Fe alloy scrap will be segregated and treated apart from Nd-Fe-B alloy scrap to preserve the alloy composition to the maximum extent possible. When the rare earth/iron alloy scrap comprises two or more rare earth metals (e.g., Tb and Dy), the method of the invention is capable of recovering the various rare earth metals involved in suitable form (e.g., as fluorides) amenable after drying for use in the thermite and other metallothermic reduction processes.

Referring again to the Figure, the rare earth/iron alloy scrap is initially dissolved in an aqueous mineral acid solution such as HCl, HNO3, or other aqueous mineral acid solutions effective to dissolve the particular rare earth/iron alloy involved. The aqueous mineral acid solutions may be used in various concentrations depending on the particular mineral acid and alloy scrap involved. For example, an aqueous HCl solution may be used in various concentrations typically above 10 volume % HCl; e.g. about 10 to about 20 volume % HCl. Particular aqueous HCl solutions used to successfully practice the method of the invention are set forth in the Examples provided below.

Typically, the aqueous mineral acid solution is contained in a suitable reaction vessel (e.g., such as a polyethylene or polyethylene lined iron retort or other HF acid resistant vessel) and the rare earth/iron alloy scrap is added to the vessel. The quantity of mineral acid solution must be sufficient to dissolve the scrap and thereby provide a mineral acid solution having the rare earth metal, iron (or other transition metal) and any other soluble alloyant dissolved therein. The scrap is added at such a rate that the dissolution reaction does not become excessively violent. The reaction vessel is suitably vented to remove hydrogen gas generated by the reaction. After the reaction is complete, the solution is filtered to remove any undissolved contaminants introduced during processing such as oil, grinding, and cutting wheel material, etc. The filtrate solution (i.e., the filtered solution having the rare earth metal, iron and any other soluble alloyant dissolved therein) is then reacted with HF acid as indicated in the Figure.

Typically, the reaction is carried out by adding HF acid to the aqueous filtrate solution in slow incremental fashion to form the insoluble, hydrated rare earth fluoride, $REF_3 \cdot xH_2O$, which selectively precipitates from the solution. In particular, the HF acid is added in an amount corresponding at least to the stoichiometric amount effective to carry the precipitation reaction to the desired endpoint (completion). Preferably, the HF acid is added in a relatively large excess amount beyond the stoichiometric amount so as to insure that substantial dissolved iron and other alloyants present in the solution are retained in soluble form; for example, as soluble complex ions (e.g., oxyhalides) and/or higher valence halides. Generally, a 5% excess of HF acid beyond the stoichiometric amount is employed to this end, but the excess is dependent on the amount of other alloyants present in the scrap.

In this way, the insoluble, hydrated rare earth fluoride is selectively precipitated from the filtrate solution to the exclusion of a substantial portion of the soluble halides and halide complexes of iron and other alloyants (e.g., boron) present in the solution. As will be described hereinbelow, the rare earth fluoride precipitate typically includes only about 5 weight % or less of iron halides after drying. Since the rare-earth fluoride is used in the thermite reduction process in which the rare-earth fluoride and iron fluoride are co-reduced, any residual amount of iron halide present is insignificant.

The HF acid is typically added to the filtrate solution as an aqueous acid solution. A wide range of HF acid solution concentrations can be employed such as, for example, a 1 weight % to 70 weight % aqueous HF solution. A 48 weight % aqueous HF solution is commercially available and has been successfully used to practice the method of the invention as described in the Examples set forth below.

In an alternative embodiment of the invention, hydrogen fluoride gas may be bubbled through the aqueous filtrate solution to form HF acid in-situ in the solution for reaction to form the insoluble rare-earth fluoride. The invention is thus not limited to adding an HF acid solution to the filtrate solution as described in detail hereinabove.

Referring to the Figure, the hydrated rare earth fluoride precipitate is separated from the treated filtrate solution by decanting and/or filtering techniques. Other techniques for precipitate recovery, such as centrifuging, could also be used. The separated rare earth fluoride precipitate is then dried to a dried powder form that is usable as feedstock (a reactant salt) in the thermite reduction process. The hydrated precipitate can be oven dried in air or dried at elevated temperature (e.g., $300^\circ$ C) using flowing anhydrous HF gas. The resulting dried rare earth fluoride typically will include only up to about 0.20 weight % water, preferably only up to about 0.05 weight % water.

In carrying out the thermite reduction process, the dried rare earth fluoride is mixed with dried iron fluoride and calcium metal (reducing metal) in selected proportions to form a reaction mixture as set forth in the Schmidt et al. U.S. Patent 4,612,047, the teachings of which are incorporated herein by reference. The reaction mixture is then heated to an elevated temperature sufficient to react the fluorides and calcium metal to form a rare earth/iron alloy and calcium fluoride slag, which are subsequently separated to yield the rare earth/iron alloy.

The following Examples are offered to illustrate the invention in further detail without limiting the scope thereof.

EXAMPLE 1

Approximately 120 grams of "Terfenol" scrap (having the composition, by weight, Tb $_{0.27}$, Dy $_{0.73}$, Fe $_{1.95}$) was added to a solution of 250 mL of concentrated aqueous HCl (36-37 weight % HCl)

and 400 mL of water contained in a 2 liter beaker. The scrap had previously been ground with a mortar and pestle to a particle size of less than 500 microns. The scrap addition was made at such a rate that the dissolution reaction did not become excessively violent. Some undissolved material (approximately 0.25 gram) was filtered off. The resulting filtrate solution was reacted with an aqueous HF solution comprising 50 mL of 48 % by weight HF diluted with 100 mL of water to provide 10 % excess HF above the aforementioned stoichiometric amount. The resulting precipitate was allowed to settle in the filtrate solution and then filtered. The filter cake was dried by blowing air over the cake for approximately 10 hours followed by drying in a $130^\circ$ C oven for several hours. Chemical analysis of the dried cake showed that the rare earth (Tb/Dy) fluoride precipitate had composition of 20.17 weight % Tb, 47.46 weight % Dy, 3.85 weight % Fe and 27.98 weight % F. Between about 85 and 94 weight % of the Tb and Dy in the scrap was recovered.

EXAMPLE 2

Approximately 520 grams of scrap metal (from the thermite reduction process) containing Nd-16% by weight Fe were ground in a mortar and pestal and were added to a solution of 1000 ml of concentrated HCl and 1600 ml of water. Dissolution of the scrap was rapid with less than 2 grams of sample not dissolved. Sufficient 48% by weight aqueous HF solution was added to the HCl solution so that an excess of fluoride ion (e.g., 10% excess HF) was present. The precipitated $NdF_3 \bullet x\ H_2O$ proved very difficult to filter. It was found that by heating the solution to near boiling, the precipitate coagulated and settled. A total of 505 grams of precipitate was collected and oven dried at $150^\circ$ C for 2 hours. The dried precipitate contained 1.6 weight% Fe and 61.1 weight% Nd.

EXAMPLE 3

200 grams of $Nd_2Fe_{14}B$ magnet alloy scrap obtained from a commercial supplier was dissolved in 800 ml of 6 N HCl contained in a 2 liter beaker. The metal scrap was added so that the mixture did not froth over the top. The HCl solution was filtered and 48 weight % aqueous HF solution was added to the filtered HCl solution so that a slight excess of fluoride ion (e.g., 10 % excess HF) was present. The resulting precipitate of $NdF_3 \bullet x\ H_2O$ was filtered and washed with a small amount of water to remove some of the excess chloride present. The filter cake was removed from the filter, air dried and then oven dried of adhering moisture at $140^\circ$ C for several hours. Recovery of the Nd from the original scrap was slightly greater than 90%. The resulting dried precipitate contained 62 weight % Nd and 4.5 weight % Fe.

EXAMPLE 4

A 160 gram portion of the $Nd_2Fe_{14}B$ magnet alloy received from another magnet alloy commercial supplier was crushed to 1/2-1/4 inch diameter pieces by processing through a jaw crusher. The crushed alloy was slowly added to about 1000 ml of 6 N HCl and the solution slowly stirred until the alloy was dissolved. An 10 % excess of aqueous HF solution (48 weight % HF) was added to the HCl solution and $NdF_3 \cdot x\ H_2O$ precipitated. This processing resulted in a greater than 90% yield of Nd. After drying, the precipitate was found to contain 60.2 weight % Nd and 3.8 weight % Fe.

While the invention has been described in terms of specific embodiments thereof, it is not intended to be limited thereto but rather only to the extent set forth in the following claims.

**Claims**

1.  A method of treating rare earth-transition metal alloy scrap, comprising the steps of:
    (a) dissolving the scrap in an aqueous mineral acid solution,
    (b) reacting the solution of dissolved rare earth metal and transition metal with HF acid in an amount effective to selectively precipitate rare earth fluoride from the solution, and
    (c) separating the precipitated rare earth fluoride from the solution.

2.  The method of claim 1 including the additional step of drying the separated rare earth fluoride.

3.  The method of claim 2 including the additional step of reducing the dried rare earth fluoride by a reducing metal in the presence of iron.

4.  The method of claim 2 wherein the dried rare earth fluoride includes up to about 5 weight % transition metal fluoride therein.

5.  The method of claim 1 wherein the alloy scrap is dissolved in step (a) in an aqueous HCl solution.

6.  The method of claim 1 wherein the alloy scrap is in the form of scrap particulates, said scrap particulates being dissolved in the aqueous mineral acid solution in step (a).

7.  The method of claim 1 wherein the alloy scrap comprises an alloy of iron and one or more of Nd, Dy, Tb, Pr, Sm, Ho, La, Ce, Eu, Gd, Er, Tm, Yb, Lu, Y and Sc.

8.  The method of claim 7 wherein the HF acid is present in step (b) in an excess amount beyond the stoichiometric amount needed to form the insoluble rare earth fluoride precipitate so as to selectively precipitate the rare earth fluoride while leaving substantial iron in soluble form in the solution.

9.  A method of treating rare earth-iron alloy scrap, comprising the steps of:
    (a) dissolving the scrap in an aqueous mineral acid solution,
    (b) reacting the solution of dissolved rare earth metal and iron with HF acid in an amount exceeding the stoichiometric amount necessary to form insoluble rare earth fluoride, said amount being effective to selectively precipitate the rare earth fluoride from the solution while leaving substantial iron in soluble form in the solution, and
    (c) separating the precipitated rare earth fluoride from the solution.

10. The method of claim 9 including the additional step of drying the separated rare earth fluoride.

11. The method of claim 10 including the additional step of reducing the dried rare earth fluoride by a reducing metal in the presence of iron.

12. The method of claim 9 wherein rare earth-iron alloy scrap is in the form of scrap particulates, said scrap particulates being dissolved in the mineral acid solution in step (a).

13. The method of claim 9 wherein the rare earth-iron alloy scrap comprises an alloy of iron and one or more of Nd, Dy, Tb, Pr, Sm, Ho, La, Ce, Eu, Gd, Er, Tm, Yb, Lu, Y and Sc.

# FIG.1

OPTIONAL SCRAP GRINDING

↓

DISSOLVE SCRAP IN MINERAL ACID SOLUTION

↓

REACT SOLUTION WITH HF – ACID TO FORM $REF_3 \cdot H_2O$ PRECIPITATE AND RETAIN Fe IN SOLUBLE FORM

↓

SEPARATE PRECIPITATE FROM SOLUTION

↓

DRY PRECIPITATE

↓

USE DRIED PRECIPITATE AS REACTANT SALT IN THERMITE REDUCTION PROCESS OR OTHER METALLOTHERMIC PROCESS